(19) Europäisches Patentamt

European Patent Office

Office européen des brevets

(11) **EP 1 156 092 B1**

(12) **EUROPEAN PATENT SPECIFICATION**

(45) Date of publication and mention
of the grant of the patent:
**13.10.2004 Bulletin 2004/42**

(21) Application number: **00110738.2**

(22) Date of filing: **19.05.2000**

(51) Int Cl.⁷: **C09J 1/00**, C04B 28/30,
C04B 11/28, C04B 9/06
// (C04B28/30, 11:00, 22:06,
40:06)

(54) **All-purpose adhesive material and process for its production**

Allzweckklebematerial und Verfahren zu dessen Herstellung

Matériau adhésif universel et son procédé de fabrication

(84) Designated Contracting States:
**AT BE CH CY DE DK ES FI FR GB GR IE IT LI LU
MC NL PT SE**

(43) Date of publication of application:
**21.11.2001 Bulletin 2001/47**

(73) Proprietors:
• **Garcia, Fernando H.**
 **7600 Mar Del Plata (AR)**
• **Pieroni, Armando**
 **7600 Mar del Plata (AR)**
• **Bartolomei, Carlo Alfredo**
 **55036 Pieve a Fosciana (LU) (IT)**

(72) Inventors:
• **Garcia, Fernando H.**
 **7600 Mar Del Plata (AR)**
• **Pieroni, Armando**
 **7600 Mar del Plata (AR)**
• **Bartolomei, Carlo Alfredo**
 **55036 Pieve a Fosciana (LU) (IT)**

(74) Representative: **Celestino, Marco**
 **ABM, Agenzia Brevetti & Marchi,**
 **Viale Giovanni Pisano, 31**
 **56123 Pisa (IT)**

(56) References cited:
**EP-A- 0 036 700**

**Description**

Field of the invention

The present invention relates to an all-purpose two-component adhesive material that can be used both for fastening together flexible and porous material, such as for example wood, plastics, fabric, as well as for joining stiff material such as metal, stone.

Furthermore, the invention relates to a process for its production. In particular, but not exclusively, the process can also be carried out by using compounds resulting from processes of neutralization of sulphuric exhausted acid as reagents.

In large amount, the adhesive material can be used to make coating material, such as tiles.

In different concentration, the adhesive material can be used as fire-retardant varnish.

Description of the prior art

Two-component cements and adhesives are known that are very strong, which however have the drawback that they are based on noxious organic compounds, that in particular contain noxious volatile solvents.

For many applications, instead, the need is felt of having adhesive material the least noxious possible and with very low impact on the environment.

Another aspect for cements and other adhesive material is their different efficacy depending on whether they are used for joining either porous surfaces such as wood and rough surfaced stone, or smooth surfaces, such as metal and glossy stone. Normally, an adhesive for smooth material is not suitable for wood and other porous material such as tiles and vice versa.

It is also appealing on the market a cheap adhesive material that in large quantities can be used to make coating material such as tiles.

It is furthermore felt the problem of disposing of and/or regenerating baths of sulphuric acid used in the industry in known processes, such as for example for the production of titanium dioxide and in many other. In this sense recovery methods are known that are expensive and then not preferable, wherein the exhausted baths are normally delivered to companies that carry out the neutralisation, which is an expensive process and generates not recyclable residues. Neutralisation processes of baths of exhausted sulphuric acid are also known with final production of calcium sulphate.

Summary of the invention

It is an object of the present invention to provide an adhesive material that does not require organic solvents and has high resistance for applications both to porous surfaces and to compact surfaces.

It is a particular object of the invention to provide an adhesive material that in large amount is used to provide tiles or similar coating material.

It is another particular object of the invention to provide an adhesive material that is used also as fire-retardant varnish.

It is a further object of the present invention to provide a process to make such a material that can be made at a very low cost, in particular through exploitation of exhausted sulphuric acid.

According to a first aspect of the invention, an adhesive material formed by a first and a second component suitable for being mixed before being applied on surfaces to be joined, wherein:

- the first component is an aqueous solution, having concentration higher than 5% in weight, of a magnesium or zinc salt or a mixture thereof, said salt being chosen among a sulphate, chloride, nitrate, acetate of magnesium or zinc;
- the second component is a mixture of magnesium oxide MgO, metal hydroxides, calcium sulphate hemi-hydrated.

Preferably, in the first component the magnesium or zinc salt are chosen among:

- magnesium sulphate $MgSO_4$, magnesium chloride $MgCl_2$; magnesium nitrate $MgNO_3$; magnesium acetate $Mg(CH_3COO)_2$, zinc sulphate $ZnSO_4$, zinc chloride $ZnCl_2$; zinc nitrate $ZnNO_3$; zinc acetate $Zn(CH_3COO)_2$.

Advantageously, in the second component the metal hydroxides are chosen among or are a mixture of: $Mg(OH)_2$; $Al(OH)_3$; $Fe(OH)_3$; $Ti(OH)_4$.

Preferably, in the second component the following weight proportion can be provided:

- MgO        5% - 40%
- Metal hydroxides        10% - 40%
- Calcium sulphate hemi-hydrated CASO$_4$.0.5        10% - 80% H$_2$O

In the second component a charge can be added, in a weight proportion from 0,1 to 2,5%, chosen among:

- Cellulose fibres;
- Glass fibres.

The adhesive material according to the invention operates according to two principles, one of physical nature and the other of physical/chemical nature, according to the material to be joined.

a) in case of material that have a porosity, such as for example wood, tiles, ceramic material, baked Tuscan tiles, gypsum, the adhesive material is adsorbed by the surfaces to join at the moment of the contact, whereby a branched crystal lattice is formed that allows to obtain a high adhesivity and resistance. More precisely, the crystal lattice is obtained by the overlapping of main crystals of the lattice with a secondary lattice of calcium sulphate. The main lattice can be made of crystals of oxy-chloride of magnesium or of zinc, oxy-sulphate of magnesium or of zinc, oxy-nitrate or oxyphosphate of magnesium or of zinc. In the examples given hereinafter oxy-sulphate of magnesium is obtained as main lattice intersected with the calcium sulphate lattice.

b) In the case of smooth surfaced material such as for example metals, in particular aluminium, glossy marble, etc., the main lattice has ions charged with electrically opposite signs at the vertices; for this reason in the composition of the adhesive material the hydroxides of not noxious cations are provided that according to different applications can have the pH adjusted between 5,5 and 11. Therefore, the metal ions of the metal surface integrate the main lattice and the same do the ions that belong to the hydroxides of the composition, thus obtaining an improved adhesivity.

According to another aspect of the invention, a material that can be used in the building industry comprises a first and a second component suitable for being mixed and cast into moulds and has the characteristic that:

- The first component is an aqueous solution, having concentration higher than 5% in weight, of a magnesium or zinc salt or a mixture thereof, said salt being chosen among a sulphate, chloride, nitrate, acetate of magnesium or zinc;
- The second component is a mixture of magnesium oxide MgO, calcium sulphate hemi-hydrated and a filling charge.

The filling charge can be chosen among or is a mixture of one of the following substances:

- Mg (OH)$_2$; Al(OH)$_3$; Fe (OH)$_3$; Ti (OH)$_4$ or other metal hydroxides;
- feldspath,
- silicon dioxide,
- kaolin,
- metal powder,
- quartz powder,
- calcium carbonate.

The material thus obtained has a high resistance to wear and to shocks and can be used for production of many types of floors, in particular tile floors.
According to a further aspect of the invention, a process for the production of a material for the building industry such as an adhesive material or a material suitable for being cast into moulds for the production of tiles, starting from a bath of sulphuric exhausted acid in presence of metal ions in solution, comprises the steps of:

- reaction of the sulphuric exhausted acid having metal sulphates as impurity with an aqueous solution of a soluble calcium salt chosen among calcium chloride, calcium nitrate, calcium perchlorate, with the precipitation of calcium sulphate bi-hydrated;
- separation of the calcium sulphate bi-hydrated from the remainder of the solution, the latter containing metal salts deriving from a reaction of double exchange with the metal sulphates;
- addition of calcium carbonate to the remainder of the solution deprived of the calcium sulphate for forming again a solution containing the calcium salt;

- precipitation from the solution containing the calcium salt by means of addition of calcium hydroxide, obtaining insoluble metal hydroxides, after the precipitation remaining only the soluble calcium salt;
- filtration of the metal hydroxides from the calcium salt in solution;
- formation together with the filtered metal hydroxides of a mixture containing also magnesium oxide and calcium sulphate hemi-hydrated;
- preparing an aqueous solution, having concentration higher than 5% in weight, of a magnesium or zinc salt or a mixture thereof, said salt being chosen among a sulphate, chloride, nitrate, acetate of magnesium or zinc;
- addition of the mixture to the solution with the magnesium or zinc salt and making a mixture that can be used as adhesive material or as material for the building industry.

MgO can be also used for preparation of $MgSO_4$, according to the reaction:

$$MgO + H_2SO_4 \rightarrow MgSO_4 + H_2O,$$

whereas the calcium sulphate hemi-hydrated can be obtained by the reaction of calcination of the calcium sulphate bi-hydrated

$$CaSO_4.2H_2O \rightarrow CaSO_4.0, 5H_2O + H_2O\uparrow.$$

The reaction $H_2SO_4$ is the sulphuric exhausted acid and the reagent MgO is present in a mixture of metal oxides obtained by calcination of the metal hydroxides $Mg(OH)_2$; $Al(OH)_3$; $Fe(OH)_3$; $Ti(OH)_4$.

Per better disclosing the invention, the following examples, not limitative, are given.

EXAMPLE 1

A composition used as adhesive material having the following weight proportion:

First component

- 13% Solution of magnesium sulphate $MgSO_4$      54,05%

Second component

- MgO      11,5%
- Metal hydroxides      19,1%
- Calcium sulphate hemi-hydrated $CASO_4.0.5$      15,3% $H_2O$
- Cellulose fibres      0,05%
  Total      100%

EXAMPLE 2

A composition used as material for the building industry having the following weight proportion:

- Solution 20% magnesium sulphate $MgSO_4$      48%
- MgO      13%
- Metal hydroxides to pH 10      13%
- Calcium sulphate hemi-hydrated $CASO_4. 0.5$      25,5% $H_2O$
- Ferrite (dye)      0,5%
  Total      100%

A product with high resistance to wear and to shocks red coloured that can be used for making floors is obtained.

EXAMPLE 3

In a possible exemplifying application of the process, the sulphuric exhausted acid and the soluble calcium salt, for example $CaCl_2$, are mixed in a precipitator, with the consequent precipitation of calcium sulphate bi-hydrated, which is filtered in a decantation apparatus and washed:

$$H_2SO_4 + M_x(SO_4)_{X+1} + CaCl_2 + H_2O \rightarrow CaSO_4.2H_2O\downarrow + HCl + M_XCl_{X+1}$$

wherein $M_x$ is a metal ion present as impurity in the sulphuric acid, whereas $M_XCl_{X+1}$ is a soluble metal chloride obtained for reaction of ion exchange with said metal ion. The metal ions $M^{x+}$ are for example $Mg^{2+}$, $Fe^{3+}$, $Ti^{4+}$, $Al^{3+}$.
In the precipitator hydrochloric acid and metal salts in solution remain in liquid phase, as resulting from the reaction of ion exchange respectively between the ions $H^+$ and other metal cations of the bath of sulphuric acid with the anions of the calcium chloride.
The starting calcium chloride can be obtained by a reaction of ion exchange between added calcium carbonate and the hydrochloric acid as coming out from the precipitator, wherein the calcium sulphate is already precipitated, as liquid part split from the calcium sulphate:

$$HCl + MCl_2 + MCl_3 + MCl_4 + CaCO_3 \rightarrow CaCl_2 + H_2O + MCl_2 + MCl_3 + MCl_4.$$

In particular the metal chlorides $MCl_x$ in solution are $MgCl_2 + AlCl_3 + FeCl_3 + TiCl_4 + H_2O$.
Carbon dioxide is formed also that is stored apart.
To separate the calcium chloride lime is added, whereby by adjusting the pH metal hydroxides precipitate that are decanted apart, according to the reaction:

$$CaCl_2 + H_2O + MCl_2 + MCl_3 + MCl_4 + Ca(OH)_2 \rightarrow CaCl_2 + M(OH)_2 + M(OH)_3 + M(OH)_4$$

The calcium chloride in solution is then used again for reaction with other exhausted acid.
The metal hydroxides precipitated and filtered $Mg(OH)_2 + Al(OH)_3 + Fe(OH)_3 + Ti(OH)_4$ are then used in the mixture for making adhesive material or for making material for the building industry as above described.
Part of the metal hydroxides, further to reaction of calcination form metal oxides according to the reaction:

$$M(OH)_2 + M(OH)_3 + M(OH)_4 \rightarrow MO + MO_2 + MO_3 + H_2O\uparrow$$

These metal oxides may be $TiO_2$, $Al_2O_3$, $MgO$. In particular $MgO$ is used as component of the mixture according to the present invention above described, whereas $Fe_2O_3$ can be used as dye for applications like example 2,

EXAMPLE 4

Sulphuric acid is provided by a chemical plant at a concentration of 98 g/l and temperature 50°C.
In a reactor for precipitation the acid is mixed with a solution of $CaCl_2$ at 10% p/v and kept at a temperature of 50°.
Starting from a flow rate of 2,4 t/h of sulphuric acid and 2,7 t/h of calcium chloride 4,2 t/h of calcium sulphate are stoichiometrically obtained. Since an is necessary excess of 15% of calcium chloride, its flow rate must be of 2,7*1,15= 3,15 t/h.
For recovering metal oxides from the reaction

$$H_2SO_4 + Mg^{2+} + Fe^{3+} + Ti^{4+} + Al^{3+} + CaCl_2 + H_2O \rightarrow$$

$$CaSO_4.2H_2O\downarrow + HCl + MgCl_2 + AlCl_3 + FeCl_3 + TiCl_4 + H_2O,$$

Once separated the calcium sulphate, calcium carbonate is added for the preparation of calcium chloride. Then the metal chlorides precipitate after the addition of calcium hydroxide. Bringing the pH to 5.6 precipitates at first $Fe(OH)_3 + Ti(OH)_4$. Then, bringing the pH to 11,5 $Mg(OH)_2 + Al(OH)_3$ precipitate.

The metal hydroxides precipitated are calcined at 1000°C obtaining a solid mixture (A) containing both ferric oxide at high resistance to wear and corundum artificial of high hardness and resistance. With 25000 l/h of effluent containing sulphuric exhausted acid 1.3 t/h of solid mixture (A) of metal oxides are obtained.

Parallel, red calcium sulphate bi-hydrated is calcined at 1000° C to obtain calcium sulphate hemi-hydrated (B) (plaster of Paris).

Part of the solid mixture (A) reacts with the sulphuric exhausted acid up to neutralization so that the magnesium oxide MgO forms magnesium oxy-sulphate $MgSO_4$ in solution (C). The other metal oxy-sulphates are used as charge.

By making a solid mixture (A) + (B) with 75% of (A) and 25% of (B) and by adding the liquid (C) further diluted in water at 12%, a mixture is obtained that is warmed up to 75° and then cast into tiles that are baked in oven, obtaining "baked red Tuscan tiles".

EXAMPLE 5

With reference to example 4, at first $Fe(OH)_3$ + $Ti(OH)_4$ + $Al(OH)_3$ can be precipitated with pH less than 11, then $Mg(OH)_2$ can be obtained bringing the pH to 11.5. Then, after calcination MgO is obtained.

Then, building material can be made from the mixture

| | |
|---|---|
| $CaSO_4.0.5H_2O$ white | 25% |
| MgO | 20% |
| $SiO_2$ | 30% |
| $MgSO_4$ (12% solution) | 25% |

That is warmed up to 75° and then moulded into tiles that are baked in oven.

EXAMPLE 6

A composition according to example 5 used as fire-retardant varnish, with dilution by addition of water to obtain a consistency suitable for application onto wood or plastics surfaces for insulating them from fire.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

**Claims**

1. An adhesive material comprising a first and a second component suitable for being mixed before being applied on surfaces to join **characterised in that** that:

    - said first component is an aqueous solution, having concentration higher than 5% in weight, of a salt chosen among a magnesium or zinc salt or a mixture thereof, said salt being chosen among a sulphate, chloride, nitrate, acetate;
    - said second component is a mixture of magnesium oxide MgO, metal hydroxides, calcium sulphate hemi-hydrated.

2. Adhesive material according to claim 1, wherein in said first component said magnesium or zinc salt are chosen among:

    - Magnesium sulphate $MgSO_4$, Magnesium chloride $MgCl_2$; Magnesium nitrate $MgNO_3$; Magnesium acetate $Mg(CH_3COO)_2$, Zinc sulphate $ZnSO_4$, Zinc chloride $ZnCl_2$; Zinc nitrate $ZnNO_3$; Zinc acetate $Zn(CH_3COO)_2$.

3. Adhesive material according to claim 1, wherein in said second component said metal hydroxides are chosen among: $Mg(OH)_2$; $Al(OH)_3$; $Fe(OH)_3$; $Ti(OH)_4$ or a mixture thereof.

4. Adhesive material according to claim 1, wherein in said second component is provided according to the following weight proportion:

| | |
|---|---|
| MgO | 5% - 40% |
| Metal hydroxides | 10% - 40% |
| hemi-hydrated Calcium sulphate $CASO_4.0.5\ H_2O$ | 10% - 80% |

5. Adhesive material according to claim 1, wherein in said second component, in a weight proportion between 0,1 and 2,5%, a charge is added chosen among:

   - Cellulose fibres;
   - Glass fibres.

6. A material that can be used in the building industry comprising a first and a second component suitable for being mixed and cast into moulds **characterised in that:**

   - said first component is an aqueous solution, having concentration higher than 5% in weight, of a magnesium or zinc salt or a mixture thereof, said salt being chosen among a sulphate, chloride, nitrate, acetate of magnesium or zinc;
   - said second component is a mixture of magnesium oxide MgO, calcium sulphate hemi-hydrated and a filling charge.

7. A material that can be used in the building industry according to claim 6, wherein said filling charge is chosen among or is a mixture of one of the following:

   - $Mg(OH)_2$; $Al(OH)_3$; $Fe(OH)_3$; $Ti(OH)_4$ or other metal hydroxides; feldspath, kaolin, metal powder;
   - Quartz powder, calcium carbonate $CaCO_3$;

8. A material that can be used in the building industry according to claim 6, with the following weight proportion:

| | |
|---|---|
| Solution >5% of magnesium sulphate $MgSO_4$ | 30 - 50% |
| MgO | 10 - 50% |
| Metal hydroxides | 10 - 50% |
| hemi-hydrated Calcium sulphate $CASO_4.0.5\ H_2O$ | 15 - 30% |

9. A process for production of a material that can be used in the building industry such as an adhesive material or a material suitable for being cast into moulds for production of tiles or as fire-retardant varnish, starting by a bath of exhausted sulphuric acid in presence of metal ions in solution, comprising the steps of:

   - reaction of the sulphuric exhausted acid having as impurity metal sulphates with an aqueous solution of a soluble calcium salt chosen among calcium chloride, calcium nitrate, calcium perchlorate, with precipitation of calcium sulphate bi-hydrated;
   - separation of the calcium sulphate bi-hydrated from the remainder of the solution, said remainder of the solution containing metal salts deriving from reaction of double exchange with said metal sulphates;
   - addition of calcium carbonate to the remainder of the solution deprived of the calcium sulphate for forming again a solution containing said calcium salt;
   - precipitation from said solution containing said calcium salt of said metal salts by means of addition of calcium hydroxide, obtaining insoluble metal hydroxides, after the precipitation of the metal hydroxides remaining in solution substantially only said soluble calcium salt;
   - filtration of said metal hydroxides from said calcium salt in solution;
   - formation of a mixture with said filtered metal hydroxides and magnesium oxide and calcium sulphate hemi-hydrated;
   - preparing an aqueous solution, having concentration higher than 5% in weight, of salt chosen among a sulphate, chloride, nitrate, acetate of magnesium or zinc;
   - addition of said mixture to said solution with said magnesium or zinc salt and making a mixture that can be used as adhesive material or as material for the building industry.

**EP 1 156 092 B1**

10. Process according to claim 9, wherein said calcium sulphate hemi-hydrated is obtained by the reaction of calcination of calcium sulphate resulting from a process of neutralization of the sulphuric acid, wherein said salt of magnesium is $MgSO_4$ and is obtained by the reaction:

$MgO + H_2SO_4 \rightarrow MgSO_4 + H_2O$, said $H_2SO_4$ being said sulphuric exhausted acid and said MgO being present in a mixture of metal oxides obtained by calcination of part of metal hydroxides chosen among $Mg(OH)_2$; $Al(OH)_3$; $Fe(OH)_3$; $Ti(OH)_4$.


**Patentansprüche**

1. Haftfähiges Material umfassend eine erste und eine zweite Komponente, die geeignet sind, vor dem Auftragen auf zu verbindenden Oberflächen gemischt zu werden, **dadurch gekennzeichnet, dass**:

   - die erste Komponente eine wässrige Lösung mit einer Konzentration von über 5 Gew.- % eines Salzes ist, ausgewählt unter einem Magnesium- oder Zinksalz oder einer Mischung derselben, wobei das Salz unter Sulfat, Chlorid, Nitrat, Acetat ausgewählt wird;
   - die zweite Komponente eine Mischung von Magnesiumoxid MgO, Metallhydroxiden, hemihydratisiertes Calciumsulfat ist.

2. Haftfähiges Material nach Anspruch 1, wobei in der ersten Komponente das Magnesium- oder Zinksalz ausgewählt wird unter:

   - Magnesiumsulfat $MgSO_4$, Magnesiumchlorid $MgCl_2$; Magnesiumnitrat $MgNO_3$; Magnesiumacetat $Mg(CH_3OO)_2$, Zinksulfat $ZnSO_4$, Zinkchlorid $ZnCl_2$; Zinknitrat $ZnO_3$; Zinkacetat $Zn(CH_3COO)_2$.

3. Haftfähiges Material nach Anspruch 1, wobei in der zweiten Komponente die Metallhydroxide ausgewählt werden unter:

   $Mg(OH)_2$, $Al(OH)_3$; $Fe(OH)_3$, $Ti(OH)_4$ oder einer Mischung derselben.

4. Haftfähiges Material nach Anspruch 1, wobei in der zweiten Komponente dem folgenden Gewichtsverhältnis entsprechend Folgendes bereitgestellt wird:

| MgO | 5 % - 40 % |
|---|---|
| Metallhydroxide | 10 % - 40 % |
| hemihydatisiertes Calciumsulfat $CASO_4.0.5\ H_2O$ | 10 % - 80 % |

5. Haftfähiges Material nach Anspruch 1, wobei in der zweiten Komponente in einem Gewichtsverhältnis zwischen 0,1 und 2,5 %, ein Zusatz zugesetzt wird ausgewählt unter:

   - Cellulosefasern;
   - Glasfasern.

6. Material, das in der Bauindustrie verwendet werden kann, umfassend eine erste und eine zweite Komponente, die geeignet sind, gemischt und in Formen gegossen zu werden, **dadurch gekennzeichnet, dass**:

   - die erste Komponente eine wässrige Lösung mit einer Konzentration von über 5 Gew.- % eines Magnesium- oder Zinksalzes oder einer Mischung derselben ist, wobei das Salz unter Sulfat, Chlorid, Nitrat, Acetat von Magnesium oder Zink ausgewählt wird:
   - die zweite Komponente eine Mischung von Magnesiumoxid MgO, hemihydratisiertem Calciumsulfat und einer Zusatzfüllung ist.

7. Material, das in der Bauindustrie verwendet werden kann nach Anspruch 6, wobei die Füllungsladung unter einem der Folgenden ausgewählt wird oder eine Mischung davon ist:

- Mg(OH)$_2$, Al(OH)$_3$; Fe(OH)$_3$; Ti(OH)$_4$ oder anderen Metallhdroxiden; Feldspat, Kaolin, Metallpulver;
- Quarzpulver, Calciumcarbonat CaCO$_3$.

8. Material, das in der Bauindustrie verwendet werden kann nach Anspruch 6 mit dem folgenden Gewichtsverhältnis:

| | |
|---|---|
| Lösung von >5 % Magnesiumsulfat MgSO$_4$ | 30 - 50 % |
| MgO | 10 - 50 % |
| Metallhydroxide | 10 - 50 % |
| hemihydatisiertes Calciumsulfat CASO$_4$.0.5 H$_2$O | 15 - 30 % |

9. Verfahren für die Herstellung eines Materials, das in der Bauindustrie verwendet werden kann, wie beispielsweise ein haftfähiges Material oder ein Material, das dazu geeignet ist, in Formen gegossen zu werden für die Herstellung von Kacheln oder als feuerhemmender Lack, ausgehend von einem Bad gebrauchter Schwefelsäure in Gegenwart von Metallionen in Lösung, umfassend die Schritte der:

- Reaktion der gebrauchten Schwefelsäure, die Metallsulfate als Verunreinigung aufweist, mit einer wässrigen Lösung eines löslichen Calciumsalzes ausgewählt unter Calciumchlorid, Calciumnitrat, Calciumperchlorat, unter Ausfällen von bihydratisiertem Calciumsulfat:

- Trennung des bihydratisierten Calciumsulfats von der restlichen Lösung, wobei die restliche Lösung Metallsalze enthält, die aus der Doppelaustauschreaktion mit den Metallsulfaten deriviert sind;
- des Zusetzens von Calciumcarbonat zu der restlichen, Calciumsulfat mangelnden Lösung für das Wiederbilden einer Calciumsalz enthaltenden Lösung;
- Ausfällung des Metallsalzes aus der das Calciumsalt enthaltenden Lösung durch Zusatz von Calciumhydroxid, Erhalten unlöslicher Metallhydroxide nach der Ausfällung der Metallhydroxide, wobei im Wesentlichen nur das lösliche Calciumsalz in Lösung bleibt;
- Filtrierung der Metallhydroxide aus dem Calciumsalz in Lösung;
- Bildung einer Mischung mit den filtrierten Metallhydroxiden und Magnesiumoxid und hemihydratisiertem Calciumsulfat;
- Zubereitung einer wässrigen Lösung einer Konzentration von mehr als 5 Gew.- % von Salz ausgewählt unter einem Sulfat, Chlorid, Nitrat, Acetat von Magnesium oder Zink;
- des Zusetzens der Mischung zu der Lösung mit dem Magnesium- oder Zinksalz und Herstellen einer Mischung, die als haftfähiges Material oder als Material für die Bauindustrie verwendet werden kann.

10. Verfahren nach Anspruch 9, wobei das hemihydratisierte Calciumsulfat durch Calcinierungsreaktion von Calciumsulfat erhalten wird, das aus einem Neutralisationsvorgang der Schwefelsäure hervorgeht, wobei das Magnesiumsalz MgSO$_4$ ist und durch folgende Reaktion erhalten wird:
MgO + H$_2$SO$_4$ → MgSO$_4$ + H$_2$O, wobei das H$_2$SO$_4$ die gebrauchte Schwefelsäure ist und das MgO in einer Mischung von Metalloxiden vorliegt, die durch Calcinieren eines Teils der unter Mg(OH)$_2$, Al(OH)$_3$, Fe(OH)$_3$, Ti(OH)$_4$ ausgewählten Metallhydroxide erhalten wird.

**Revendications**

1. Matériau adhésif comprenant un premier et un second composant adéquats pour être mélangés avant d'être appliqués sur des surfaces à lier **caractérisé en ce que** :

- ledit premier composant est une solution aqueuse, ayant une concentration supérieure à 5 % en poids, d'un sel choisi parmi un sel de magnésium ou de zinc ou un mélange de ceux-là, ledit sel étant choisi parmi un sulfate, un chlorure, un nitrate, un acétate ;
- ledit second composant est un mélange d'oxyde de magnésium MgO, d'hydroxydes métalliques, de sulfate de calcium semi-hydraté.

2. Matériau adhésif selon la revendication 1, dans lequel dans ledit premier composant lesdits sels de magnésium ou de zinc sont choisis parmi :

- le sulfate de magnésium MgSO$_4$, le chlorure de magnésium MgCl$_2$ ; le nitrate de magnésium MgNO$_3$ ; l'acétate

de magnésium Mg(CH$_3$COO)$_2$, le sulfate de zinc ZnSO$_4$, le chlorure de zinc ZnCl$_2$ ; le nitrate de zinc ZnNO$_3$ ; l'acétate de zinc Zn(CH$_3$COO)$_2$.

3. Matériau adhésif selon la revendication 1, dans lequel dans ledit second composant lesdits hydroxydes métalliques sont choisis parmi :

Mg(OH)$_2$, Al(OH)$_3$; Fe(OH)$_3$, Ti(OH)$_4$ ou un mélange de ceux-là.

4. Matériau adhésif selon la revendication 1, dans lequel dans ledit second composant est fourni selon les proportions en poids suivantes :

| | |
|---|---|
| MgO | 5 %-40 % |
| Hydroxydes métalliques | 10 %-40 % |
| Sulfate de calcium semi-hydraté CaSO$_4$, 0,5 H$_2$O | 10 %-80 % |

5. Matériau adhésif selon la revendication 1, dans lequel dans ledit second composant, dans une proportion en poids entre 0,1 et 2,5 %, une charge est ajoutée choisie parmi :

- des fibres de cellulose ;
- des fibres en verre.

6. Matériau qui peut être utilisé dans l'industrie du bâtiment comprenant un premier et un second composant adéquats pour être mélangés et coulés dans un moulage **caractérisé en ce que** :

- ledit premier composant est une solution aqueuse, ayant une concentration supérieure à 5 % en poids, d'un sel de magnésium ou de zinc ou un mélange de ceux-là, ledit sel étant choisi parmi un sulfate, un chlorure, un nitrate, un acétate de magnésium ou de zinc ;
- ledit second composant est un mélange d'oxyde de magnésium MgO, de sulfate de calcium semi-hydraté et d'une charge de remplissage.

7. Matériau qui peut être utilisé dans l'industrie du bâtiment selon la revendication 6, dans lequel ladite charge de remplissage est choisie parmi ou est un mélange de l'un des composés suivants :

- Mg(OH)$_2$, Al(OH)$_3$; Fe(OH)$_3$, Ti(OH)$_4$ ou d'autres hydroxydes métalliques ; le feldspath, le kaolin, la poudre métallique ;
- de la poudre de quartz, de carbonate de calcium CaCO$_3$ ;

8. Matériau qui peut être utilisé dans l'industrie du bâtiment selon la revendication 6, avec les proportions en poids suivantes :

| | |
|---|---|
| Solution >5 % en sulfate de magnésium MgSO$_4$ | 30-50 % |
| MgO | 10-50 % |
| Hydroxydes métalliques | 10-50 % |
| Sulfate de calcium semi-hydraté CaSO$_4$, 0,5 H$_2$O | 15-30 % |

9. Procédé de fabrication d'un matériau qui peut être utilisé dans l'industrie du bâtiment tel qu'un matériau adhésif ou un matériau adéquat pour être coulé dans des moulages pour la production de tuiles ou comme vernis ignifuge, commençant par un bain d'acide sulfurique dilué en présence d'ions métalliques en solution comprenant les étapes de :

- réaction de l'acide sulfurique dilué ayant comme impureté des sulfates de métaux avec une solution aqueuse d'un sel de calcium soluble choisi parmi les chlorure de calcium, nitrate de calcium, perchlorate de calcium, avec la précipitation du sulfate de calcium di-hydraté ;
- séparation du sulfate de calcium di-hydraté du reste de la solution, ledit reste de la solution contenant des sels de métal dérivant de la réaction de double échange avec lesdits sulfates de métal ;
- addition de carbonate de calcium au reste de la solution privée du sulfate de calcium pour former à nouveau une solution contenant ledit sel de calcium ;

- précipitation à partir de ladite solution contenant ledit sel de calcium desdits sels métalliques au moyen de l'addition d'hydroxyde de calcium, pour obtenir des hydroxydes métalliques insolubles, après la précipitation des hydroxydes métalliques restant en solution pratiquement uniquement ledit sel de calcium soluble ;
- filtration desdits hydroxydes métalliques à partir du sel de calcium en solution ;
- formation d'un mélange avec lesdits hydroxydes métalliques filtrés et l'oxyde de magnésium et le sulfate de calcium semi-hydraté ;
- préparation d'une solution aqueuse, ayant une concentration supérieure à 5 % en poids, d'un sel choisi parmi un sulfate, chlorure, nitrate, acétate de magnésium ou de zinc ;
- addition dudit mélange à ladite solution avec ledit sel de magnésium ou de zinc et fabrication d'un mélange qui peut être utilisé comme matériau adhésif ou comme matériau pour l'industrie du bâtiment.

10. Procédé selon la revendication 9, dans lequel ledit sulfate de calcium semi-hydraté est obtenu par la réaction de calcination du sulfate de calcium résultant d'un procédé de neutralisation de l'acide sulfurique, dans lequel ledit sel de magnésium est le $MgSO_4$ et est obtenu par la réaction :

$MgO + H_2SO_4 \rightarrow MgSO_4 + H_2O$, ledit $H_2SO_4$ étant ledit acide sulfurique dilué et ledit MgO étant présent dans un mélange d'oxydes métalliques obtenus par calcination d'une partie des hydroxydes métalliques choisis parmi $Mg(OH)_2$, $Al(OH)_3$; $Fe(OH)_3$, $Ti(OH)_4$.